**Europäisches Patentamt**

**European Patent Office**

**Office européen des brevets**

(19)

(11) Publication number: **0 071 696**
**B1**

## (12) EUROPEAN PATENT SPECIFICATION

(45) Date of publication of patent specification: **01.10.86**

(51) Int. Cl.⁴: **G 11 B 5/40,** G 11 B 5/10

(21) Application number: **82102720.8**

(22) Date of filing: **31.03.82**

(54) **Magnetic head assembly.**

(30) Priority: **06.08.81 US 290646**

(43) Date of publication of application:
**16.02.83 Bulletin 83/07**

(45) Publication of the grant of the patent:
**01.10.86 Bulletin 86/40**

(84) Designated Contracting States:
**DE FR GB**

(56) References cited:
**US-A-3 290 559**
**US-A-3 319 238**
**US-A-3 387 113**
**US-A-4 279 292**

**PATENTS ABSTRACTS OF JAPAN, vol. 5, no.
64(P-59)736r, 30th April 1981;**

**PATENTS ABSTRACTS OF JAPAN.**
**Soviet Inventions Illustrated Week C11, 23.
April 1980, Section R 34**

(73) Proprietor: **International Business Machines
Corporation
Old Orchard Road
Armonk, N.Y. 10504 (US)**

(72) Inventor: **Lopez, Jorge Luis
3073 West Wildwood
Tucson Arizona 85704 (US)**
Inventor: **Chow, William Wai-Chung
1440 South Sumatra Place
Tucson Arizona 85710 (US)**
Inventor: **Hu, Paul Yu-Fei
8400 Fernhill Drive
Tucson Arizona 85715 (US)**
Inventor: **Fields, jr., Davis Stuart
2630 North Santa Lucia Avenue
Tucson Arizona 85715 (US)**

(74) Representative: **Ahlman, Bertel
IBM Svenska AB Intellectual Property
Department Box 962
S-18 109 Lidingö (SE)**

Courier Press, Leamington Spa, England.

## Description

This invention relates to magnetic head assemblies.

EP—A—68 078 (to be considered under Art 54(3)EPC) discloses a head assembly comprising read and write head modules aligned and positioned within a housing and clamped by a leaf spring between the walls of the housing. The leaf spring compensates for thermal mismatch between the housing and the modules and for stress fluctuation that occurs with temperature change.

US—A—3 387 113 discloses a feedback loop for sensing the temperature of an electronic assembly to be thermatly stabilized and for reducing the current and cooling capacity of a thermoelectric cooling element (Peltier element).

To enhance operation of the recording and playback modes, it is desirable to increase current to the magnetic heads. Increased current tends to increase heat generation, which not only increase the stress but would adversely affect parameters such as permeability of magnetic materials used in the head, the resistance of any magnetoresistive (MR) films used as the read sensor, the integrity of thin films employed, and surface stresses among other things. To realize further improvement in head performance the generated heat must be reduced in the head area, especially at the transducing gaps.

One approach to reduce heat during operation of a magnetic head is to reduce the width of the pulse of the write signal waveform. However, pulse width reduction is limited by the capability of the channel electronics, including the write drivers. Other approaches that provide passive compensation for reducing heat in a head assembly have been attempted, but not with optimum success.

The invention seeks to reduce the operating temperature of magnetic heads by providing a magnetic head assembly in which high temperatures produced during head operation may be reduced.

In such a magnetic head assembly, performance may be improved without deleterious thermal effects.

The present invention is defined by the appended claim 1. How the invention can be carried into effect is hereinafter particularly described with reference to the accompanying drawings in which;

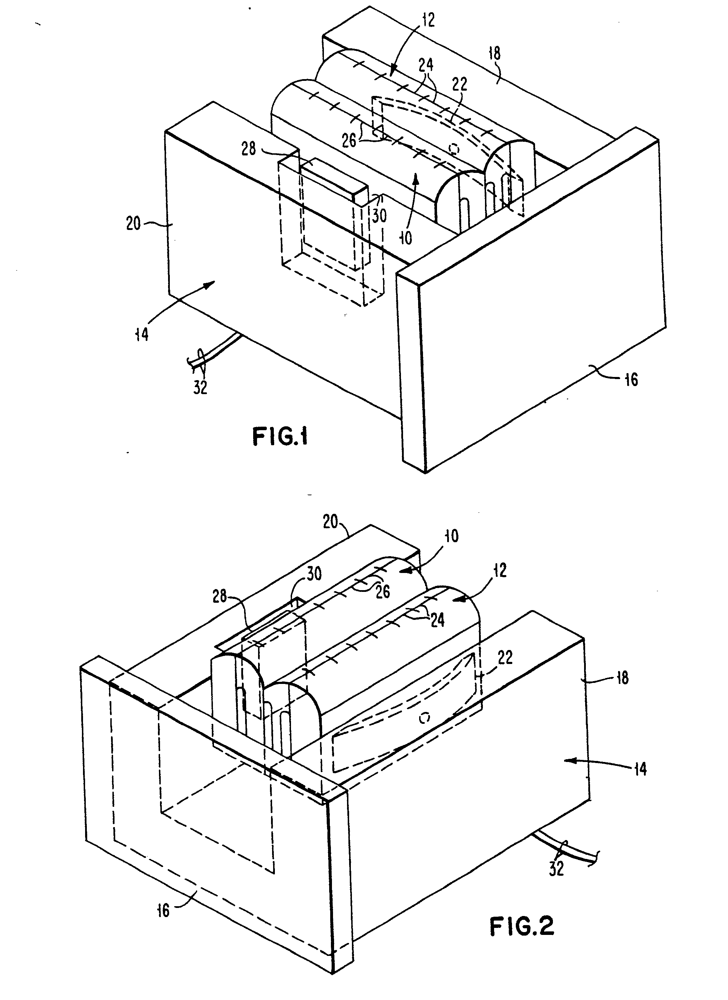

FIGURE 1 is an isometric front view of a magnetic head assembly incorporating a thermoelectric cooling element, in accordance with this invention; and

FIGURE 2 is an isometric rear view of the magnetic head assembly of FIGURE 1.

A magnetic head assembly includes a write head module 10 and a read head module 12 securely positioned within a nonmagnetic channel housing 14 disposed on a nonmagnetic baseplate 16. A nonmagnetic material such as aluminium may be used.

The modules 10 and 12 comprises multi-element magnetic heads formed with ferrite and glass spacers that include transducing gaps 26 and 24, respectively. The write and read modules are positioned side-by-side between the walls 18 and 20 of the housing, and are maintained in a fixed relationship by means of a clamp spring 22 that provides thermal compensation, as disclosed in the published European patent application EP—A—68 079. The transducing gap 24 and 26 of the multi-element read and write modules respectively project out of the planes of the top surfaces of the housing walls 18 and 20 and the base-plate 16, so that the head modules can interact in transducing relation with a magnetic medium (not shown).

A thermoelectric cooling element 28 is seated in a rectangular slot 30 formed in the housing wall 20 adjacent to the write module 10. The thermoelectric cooling element 28 is secured to the slotted housing wall by a thermally conductive epoxy adhesive for example. The cooling element had a hot junction on the side in contact with the housing wall and a cold junction that contacts the write module. Electric current for activating the cooling element is obtained from a power supply through wire leads 32.

The thermoelectric cooling element operates on the principle of thermoelectric (Peltier) cooling by actively transporting head energy by means of current carriers. The flow of heat energy causes a net temperature gradient to appear so that the temperature at the cold junction is lowered and the temperature at the hot junction is increased.

The thermoelectric cooling element has the advantage of having no moving parts and is comparatively very small in size. An example of a commercially available module that may be used with this invention is the Melcor "Frigichip" (a registered trademark of Melcor) miniature ceramic module No. FC 0.6—66—06L.

During operation, the thermoelectric cooling element 28 effectively transfers heat energy from the head module assembly to the slotted housing wall 20. The clamp spring 22 also acts to transfer heat energy from the head module assembly to the housing wall. The housing structure thus serves as a heat sink, and in conjuction with baseplate 16 diffuses the heat to the ambient environment by natural convection. In this way, excessive heat is conducted from the read and write heads to the surroundings external to the housing and baseplate.

As a result of the temperature reduction of the heads during read and write operation, the problems attendant with thermal effects are eliminated or minimized. In one implementation of the invention, a 20° Celsius reduction in temperature was realized while using only 250 milliamperes of current to the cooling element.

The size of the cooling element in relation to the head assembly is only exemplary and arises because most heating during transducer operation occurs in the central part of the modules.

To maintain the operating temperature of the heads above the dew point, a thermally controlled feedback loop is employed to sense the temperature of the head and to reduce the current and the cooling capacity of the thermoelectric cooling element accordingly.

In some instances, the read and write modules may be reversed so that the thermolectric cooling unit is attached in thermal relationship with the read module. Alternatively, or additionally, a thermoelectric cooing unit may be thermally coupled to the ends of both modules and to the baseplate. Additionally, a thermoelectric cooling unit may be thermally coupled to the ends of both modules.

### Claims

1. A magnetic head assembly comprising at least one magnetic head module (10), comprising a thermoelectric cooling element (28) whose cold junction is in thermal contact with the head module and whose hot junction is in thermal contact with a heat sink (14) comprising a nonmagnetic thermally conductive housing in which the module is mounted, a thermally controlled feedback loop for sensing the temperature of the head and for reducing the current and the cooling capacity of said thermoelectric cooling element, and a clamping spring (22), maintaining the head module within the housing, for heat transfer from the module to the housing.

2. An assembly according to claim 1, in which the housing is supported by a baseplate (16), serving as a heat diffuser.

3. An assembly according to any preceding claim, including read and write head modules disposed side-by-side.

4. An assembly according to claim 3, in which the write head module is positioned adjacent to the cooling element.

### Patentansprüche

1. Magnetkopfaufbau mit wenigstens einem Magnetkopfmodul (10), mit einem thermoelektrischem Kühlelement (28), dessen kalter Übergang in thermischem Kontakt mit dem Kopfmodul und dessen heißer Übergang in thermischem Kontakt mit einem Kühlkörper (14) ist, welcher ein nichtmagnetisches wärmeleitendes Gehäuse umfaßt, in welchem der Modul angebracht ist, einer thermisch gesteuerten Rückkopplungsschleife zum Abfühlen der Temperatur des Kopfes und zur Einstellung des Stroms und der Kühlleistung des thermoelektrischen Kühlelements, und einer den Kopfmodul im Gehäuse haltenden Klemmfeder (22) für eine Wärmeübertragung vom Modul auf das Gehäuse.

2. Aufbau nach Anspruch 1, bei welchem das Gehäuse von einer Grundplatte (16) getragen wird, welche als Wärmediffusor dient.

3. Aufbau nach irgendeinem vorstehenden Anspruch, welcher nebeneinander angeordnete Lese- und Schreibkopfmoduln aufweist.

4. Aufbau nach Anspruch 3, bei welchem der Schreibkopfmodul angrenzend an das Kühlelement angeordnet ist.

### Revendications

1. Ensemble de tête magnétique comprenant au moins un module de tête magnétique (10), équipé d'un élément de refroidissement thermoélectrique (28) dont la jonction froide est en contact thermique avec le module tête et dont la jonction chaude est en contact thermique avec un puits de chaleur (14) qui comprend un boîtier non magnétique conducteur de la chaleur dans lequel le module est monté, une boucle de réaction à commande thermique destinée à capter la température de la tête et à régler l'intensité électrique et la capacité de refroidissement dudit élément de refroidissement thermoélectrique, et un ressort de serrage (22) qui maintient le module de tête dans le boîtier, pour transmettre la chaleur du module au boîtier.

2. Ensemble selon la revendication 1, dans lequel le boîtier est supporté par une plaque de base (16) qui sert de diffuseur de chaleur.

3. Ensemble selon une quelconque des revendications précédentes, comprenant des modules de têtes de lecture et d'enregistrement disposés côte à côte.

4. Ensemble selon la revendication 3, dans lequel le module de tête d'enregistrement est positionné adjacent à l'élément de refroidissement.

FIG.1

FIG.2

1